# EUROPEAN PATENT SPECIFICATION

(11) **EP 2 834 694 B1**
(45) Date of publication and mention of the grant of the patent: **01.11.2017**
(21) Application number: 13712562.1
(22) Date of filing: 27.03.2013
(51) Int. Cl.: G02B 6/44

(54) **CABLE FIXATION BRACKET**
KABELHALTERUNG
CONSOLE DE FIXATION DE CÂBLE

(30) Priority: 03.04.2012 US 201261619660 P
(43) Date of publication of application: 11.02.2015
(73) Proprietor: CommScope Connectivity Belgium BVBA, 3010 Kessel-Lo (BE)
(72) Inventor: SCHURMANS, Eric, B-3450 Hogen-Geetbets (BE); ALAERTS, Roger, B-3200 Aarschot (BE); CLAESSENS, Bart, Mattie, B-3500 Hasselt (BE); BERVOETS, Marc, B-3500 Hasselt (BE); ISTAS, Peter, Jerome, J, B-3800 Sint-Truiden (BE)
(74) Representative: Patentanwälte Bressel und Partner mbB
(86) International application number: PCT/EP2013/056614
(87) International publication number: WO 2013/149922

(56) References cited:
- EP-A1- 2 136 118
- WO-A1-2012/121955
- US-A- 6 011 218

## Description

### Technical Field

The present disclosure relates generally to telecommunications equipment. More particularly, the present disclosure relates to devices for fixing telecommunications cables to telecommunications equipment.

### Background

Telecommunications systems such as fiber optic communications systems are becoming prevalent in part because service providers want to deliver high band width communication capabilities to customers. Fiber optic communications systems employ a network of fiber optic cables to transmit large volumes of data and voice signals over relatively long distances. Being part of a large fiber optic network, cables routed to and from telecommunications equipment may be exposed to pulling, pushing or rotational forces. It is desirable to provide effective cable fixation or termination for fiber optic cables that are secured or anchored to telecommunications equipment or fixtures to limit damage to optical fibers within the cables. Documents EP 2 136 118 A1 and US 6 011 218 disclose U-shaped cable fixation brackets.

### Summary

Certain aspects of the present disclosure relate to effective arrangements for providing fixation or termination for telecommunications cables.

According to one inventive aspect, the disclosure relates to a cable fixation device formed from a base and a plate that is configured to be coupled to the base so as to have limited relative movement (e.g., floatable movement) with respect to the base, wherein the plate is used to fix a telecommunications cable to a piece of telecommunications equipment. The base may be formed from a single stamped or bent sheet metal piece.

According to another inventive aspect, the base of the cable fixation or termination device defines a first sidewall, a second sidewall, and a bottom wall connecting the first sidewall to the second sidewall, wherein the sidewalls and the bottom wall may be integrally formed from a single piece of stamped or bent sheet metal. The base may be coupled to a telecommunications fixture or equipment. A plate that includes side tabs may be coupled to the base. As the plate is lowered onto the base, the side tabs are inserted into vertical cutouts that are provided on the sidewalls of the base. Each sidewall of the base also defines a notch that extends generally in a direction from the front to the back, wherein the tabs being lowered downwardly along the vertical cutouts may be moved rearwardly in being inserted into the notches. The difference between the width of the notches and the thickness of the tabs may provide the plate with limited relative movement (e.g., floatable movement) with respect to the base after the two are coupled. The plate defines a clamp mount for mounting a clamp assembly in fixing a cable to the plate.

According to another inventive aspect, the disclosure relates to a cable termination device. The termination device includes a cable termination bracket that is configured to terminate the strength member of a telecommunications cable to a piece of telecommunications equipment. The cable termination bracket includes a base configured to be mounted to a piece of telecommunications equipment, the base defining a front and a back, the base defining a first sidewall and a second sidewall. A plate is configured to be mounted to the first and second sidewalls to allow for limited relative movement therebetween, the plate defining a first clamp mount for receiving a first clamp assembly for fixedly mounting a strength member of a telecommunications cable to the plate such that any forces on the strength member are transferred to the plate. When the plate is pulled or pushed with respect to the base, the plate is restricted from movement along a front to back direction, wherein the plate is mounted to the base such that the plate is configured to relatively move with respect to the base along a first plane perpendicular to the first and second sidewalls and along a second plane parallel to the first and second sidewalls.

According to another aspect, the present disclosure is related to a cable termination bracket comprising a base configured to be mounted to a piece of telecommunications equipment, the base defining a front and a back, the base defining a first sidewall, a second sidewall, and a transverse wall connecting the first sidewall to the second sidewall, the transverse wall configured for mounting the base to the piece of telecommunications equipment, each of the first and second sidewalls defining a notch that extends generally in a direction from the front to the back, each of the first and second sidewalls defining a first stop surface at a rear end of the notch for limiting movement in a rearward direction, each of the first and second sidewalls also defining a second stop surface for limiting movement in a forward direction. A plate is configured to be mounted to the base, the plate defining a first side and a second side, the plate defining a tab at each of the first side and the second side, the tabs configured to be inserted into the notches defined by the first and second sidewalls of the base in a direction from the front to the back and abut the first stop surface when the plate is pulled in the rearward direction, each tab also defining an opening for receiving a bar, wherein once the plate is mounted to the base, the bar is configured to abut the second stop surface when the plate is pushed in the forward direction. The plate further includes a first clamp mount configured for receiving a first clamp assembly for fixedly mounting a strength member of a telecommunications cable to the plate such that any forces on the strength member are transferred to the plate, wherein the notches and the tabs are configured with gaps therebetween along a top to bottom direction to allow floatable movement of the plate relative to the base along a first plane perpendicular to the first sidewall, the second sidewall, and the transverse wall and along a second plane parallel to the first sidewall and the second sidewall and perpendicular to the transverse wall.

According to yet another aspect, the present disclosure is related to a cable termination assembly comprising a telecommunications fixture, a telecommunications cable defining an outer jacket and a longitudinally extending strength member, and a cable termination bracket. The cable termination bracket includes a base mounted to the telecommunications fixture, the base defining a front and a back, the base defining a first sidewall and a second sidewall, and a plate mounted to the first and second sidewalls of the base to allow for limited relative movement therebetween, the plate defining a first clamp mount and a second clamp mount, wherein when the plate is pulled or pushed with respect to the base, the plate is restricted from movement along a front to back direction, wherein the plate is mounted to the base such that the plate is configured to relatively move with respect to the base along a first plane perpendicular to the first and second sidewalls and along a second plane parallel to the first and second sidewalls. The cable termination assembly further includes a first a first clamp assembly mounted to the first clamp mount, the first clamp assembly fixedly mounting the strength member of the telecommunications cable to the plate, and a second clamp assembly mounted to the second clamp mount, the second clamp assembly fixedly mounting the outer jacket of the telecommunications cable to the plate.

A variety of additional inventive aspects will be set forth in the description that follows. The inventive aspects can relate to individual features and to combinations of features. It is to be understood that both the foregoing general description and the following detailed description are exemplary and explanatory only and are not restrictive of the broad inventive concepts upon which the embodiments disclosure herein are based.

### Brief Description of the Drawings

FIG. 1 is a front, top, right side perspective view of a cable termination assembly having examples of inventive aspects in accordance with the present disclosure, the termination assembly illustrated with a cable mounted to a first plate of a strength member termination bracket and with another cable mounted to a second plate of the strength member termination bracket of the assembly;
FIG. 2 illustrates the cable termination assembly of FIG. 1 from a front, top, left side perspective view thereof, with two cables mounted to the termination bracket of the assembly in a different configuration than that of FIG. 1;
FIG. 3 is a front, top, right side perspective view of the termination bracket of the assembly of FIGS. 1-2;
FIG. 4 is a front, top, left side perspective view of the termination bracket of FIG. 3;
FIG. 5 is a front, bottom, right side perspective view of the termination bracket of FIG. 3;
FIG. 6 is an exploded view of the termination bracket of FIG. 3;
FIG. 7 is a front view of the termination bracket of FIG. 3;
FIG. 8 is a left side view of the termination bracket of FIG. 3; and
FIG. 9 is a top view of the termination bracket of FIG. 3.

### Detailed Description

The present disclosure relates to arrangements and methods for providing effective fixation or termination for telecommunications cables 10.

According to one example embodiment, the telecommunications cables 10 discussed herein are fiber optic cables that define an outer jacket 12, at least one optical fiber therein, and a longitudinally extending strength member 14. It should be noted that a fiber optic cable 10 is simply one example of a telecommunications cable that may be used to describe the inventive features of the cable termination device of the present disclosure and other types of cables, including electrical cables that may also include longitudinal strength members 14, may be terminated with the devices discussed herein.

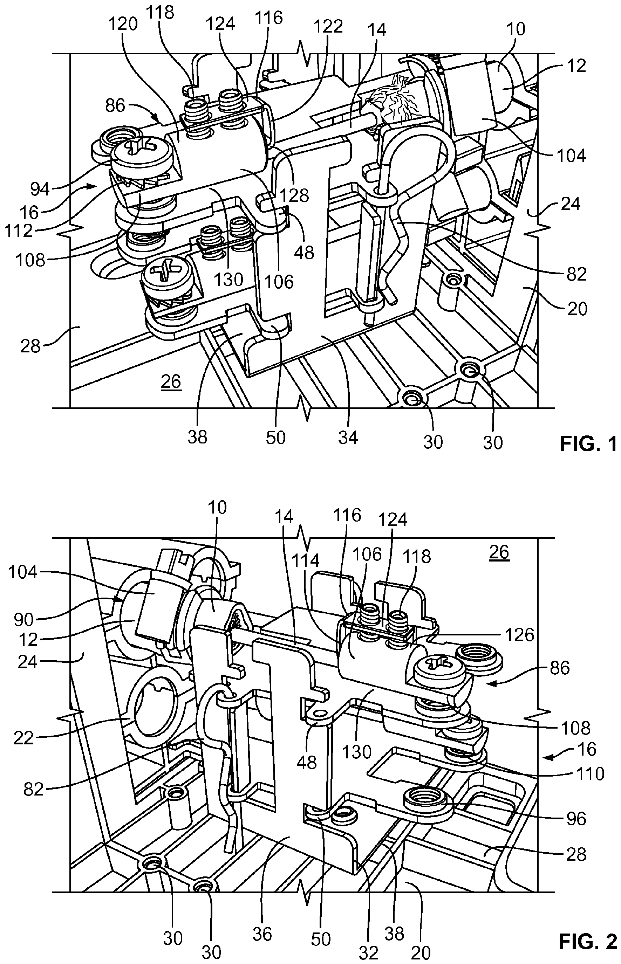

Referring now to FIGS. 1-2, an example of a cable termination assembly 16 having features that are examples of inventive aspects in accordance with the present disclosure has been illustrated. FIGS. 1 and 2 illustrate two different example configurations of cables 10 terminated using the cable termination bracket 18 of the present invention.

In FIGS. 1-2, a piece of telecommunications equipment in the form of a fiber optic closure 20 is illustrated with cables 10 terminated thereto using the termination bracket 18 of the present invention. It should be noted that the fiber optic closure 20 depicted herein is simply one example of a piece of telecommunications equipment that will be used to describe the inventive features of the cable termination bracket 18 of the present disclosure and that the termination bracket 18 may be used with a variety of different telecommunications equipment.

Telecommunications equipment to which telecommunications cables are terminated using the termination bracket of the present invention may also be referred to as telecommunications fixtures (or fiber optic fixtures if the equipment depicted are fiber optic equipment).

As shown, the fiber optic closure 20 defines a number of openings 22 on an end wall 24 for receiving cables 10 therethrough toward the interior 26 of the closure 20. An interior wall 28 of the closure that is generally perpendicular to the end wall 24 defines a plurality of fastener openings 30. It will be noted that the fastener openings 30 on the interior wall 28 may be preexisting openings for mounting various types of fixtures, equipment, or others types of cable termination devices. The cable termination bracket 18 of the present invention is configured such that it can be mounted to these preexisting fastener openings 30. Thus, the termination bracket 18 of the present invention is configured to be retrofittable to existing telecommunications equipment such as the fiber optic closure 20 illustrated in FIGS. 1-2.

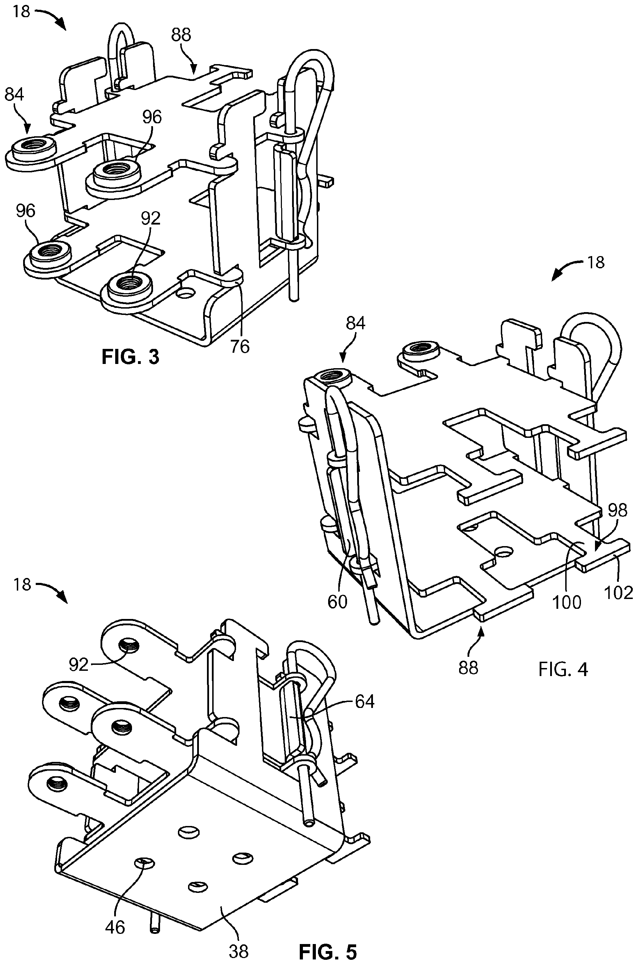

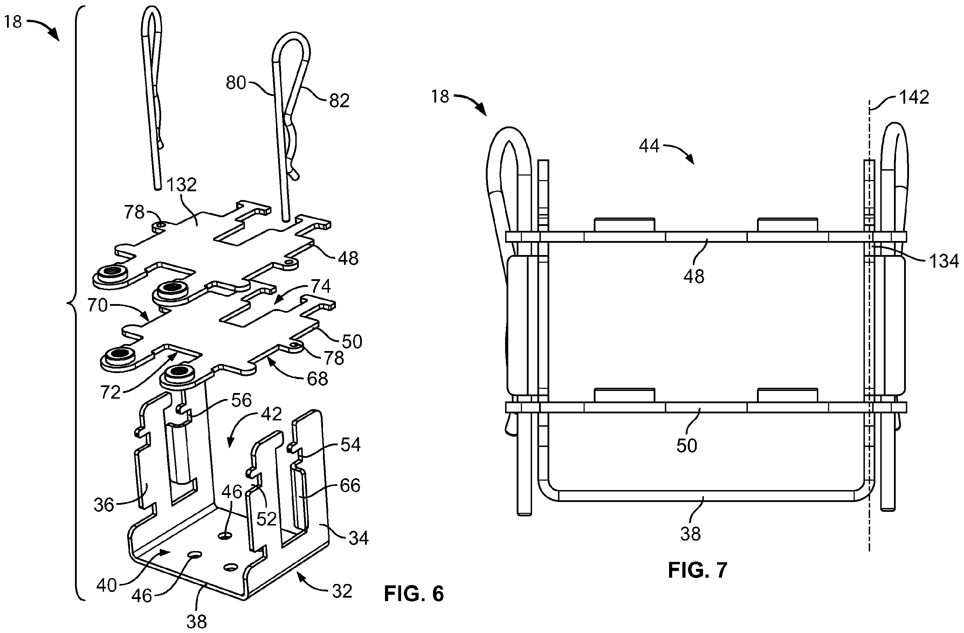

Now referring to FIGS. 3-9, the cable termination bracket 18 is illustrated in isolation removed from the fiber optic closure 20 and the fiber optic cables 10. The termination bracket 18 includes a base 32 with a first sidewall 34, a second sidewall 36, and a transverse bottom wall 38 connecting the first sidewall 34 to the second sidewall 36. The base 32 defines a generally U-shaped configuration with an open front 40, an open back 42, and an open top 44. The bottom wall 38 is configured with fastener openings 46 for mounting the base 32 to a piece of telecommunications equipment such as the fiber optic closure 20.

In the depicted embodiment, the termination bracket 18 also includes a first plate 48 and a second plate 50, the plates 48, 50 configured to be mounted to the base 32. According to example embodiments, plates 48 and 50 may include the same configuration for cost effective manufacturing.

As will be discussed in further detail below, the plates 48, 50 are configured to include clamp mounts for receiving clamp assemblies for fixedly mounting cables 10 to the plates 48, 50 such that any forces on the cables 10 are transferred to the plates 48, 50.

Still referring to FIGS. 3-9, each of the first sidewall 34 and the second sidewall 36 of the base 32 defines notches 52 that extend generally in a direction from the front 40 to the back 42. In the depicted embodiment, each of the first sidewall 34 and the second sidewall 36 defines four notches 52. As shown, the four notches 52 on each sidewall 34, 36 may be defined as two horizontal pairs or two vertical pairs. If the four notches 52 are defined as two horizontal pairs, each pair of the two horizontal pairs are aligned vertically in a front to back direction. If the four notches 52 are defined as two vertical pairs, each pair of the two vertical pairs are aligned horizontally in a top to bottom direction.

Each notch 52 defines a first stop surface 54 at a rear end 56 thereof for limiting movement in a rearward direction 58. As shown, each of the first and second sidewalls 34, 36 also defines a second stop surface 60 that is for limiting movement in a forward direction 62. The second stop surface 60 is defined at least partially by an extension 64 that projects transversely outwardly from the first and second sidewalls 34, 36. In the depicted embodiment, the extension 64 is formed by an integral portion 66 of each sidewall 34, 36 that is bent outwardly from the rest of the sidewall 34, 36.

Still referring to FIGS. 3-9, each plate 48, 50 configured to be mounted to the base 32 defines a first side 68, a second side 70, a front end 72, and a rear end 74. In the depicted embodiment, each plate 48, 50 defines two tabs 76 at each of the first side 68 and the second side 70.

As shown, after each plate 48, 50 is lowered in a top to bottom direction into vertical cutouts defined on each of the sidewalls 34, 36 of the base (from the open top 44 toward the bottom wall 38 of the base 32), the tabs 76 are moved rearwardly and are inserted into the notches 52 defined by the first and second sidewalls 34, 36 of the base 32 in a direction from the front 40 toward the back 42. The tabs 76 are configured to abut the first stop surfaces 54 when the plates 48, 50 are pulled in the rearward direction 58 to limit movement of the plates 48, 50. As shown, in the depicted embodiment, the tabs 76 adjacent the rear end 74 on each side 68, 70 also defines openings 78. Each opening 78 is configured for receiving a bar 80 in a direction from top to bottom. Once the plate 48, 50 is mounted to the base 32, the bar 80 is configured to abut the second stop surface 60 when the plate 48, 50 is pushed in the forward direction 62 to limit movement of the plate 48, 50 in the forward direction 62. In the depicted embodiment of the termination bracket 18, the bar 80 is defined by a portion of a cotter pin 82 that is used for mounting the plates 48, 50 to the base 32. As shown, when both of the first plate 48 and the second plate 50 are mounted to the base 32, the openings 78 of the tabs 76 adjacent the rear end 74 for each plate 48, 50 align and the same cotter pin 82 can be used to fix both plates 48, 50 to the base 32. The cotter pin 82 may include flexible portions that are used to retain the cotter pin 82 attached to the tabs 76 of the plates 48, 50.

Still referring to FIGS. 3-9, each plate 48, 50 defines at least one first clamp mount 84 configured for receiving a first clamp assembly 86 for fixedly mounting the strength member 14 of a telecommunications cable 10 to the plate 48, 50 (as shown in FIGS. 1-2). In this manner, any forces, such as pulling forces, pushing forces, or rotational forces, on the strength member 14 are transferred to the plate 48, 50. In the depicted embodiment, each plate 48, 50 includes two first clamp mounts 84, wherein the first clamp mounts 84 are located adjacent the front ends 72 of the plates 48, 50. Each plate 48, 50 also defines at least one second clamp mount 88 configured for receiving a second clamp assembly 90 for fixedly mounting the outer jacket 12 of the telecommunications cable 10 to the plate 48, 50. In the depicted embodiment, each plate 48, 50 includes two second clamp mounts 88, wherein the second clamp mounts 88 are located adjacent the rear ends 74 of the plates 48, 50.

The first clamp mounts 84 are defined by threaded openings 92 for receiving a fastener 94 for mounting the first clamp assembly 86, as will be described in further detail below. As shown, the threaded opening 92 is defined at least partially by a press nut 96 integrally mounted to the plate 48, 50.

The second clamp mounts 88 are defined by T-shaped extensions 98. Each T-shaped extension 98 defines a mounting portion 100 and a retaining portion 102. The mounting portion 100 is configured to receive a portion of a ring clamp 104 that may define the second clamp assembly 90 as shown in FIGS. 1-2 for fixing the outer jacket 12 of a cable 10 to the plate 48, 50. The retaining portion 102 is configured to prevent rearward movement of the ring clamp 104 and keep the clamp 104 attached to the second clamp mount 88.

Still referring to FIGS. 1-2, as noted above, the second clamp assembly 90 is configured for fixing the outer jacket 12 of the cable 10 to the plates 48, 50 and the first clamp assembly 86 is configured for fixing the strength member 14 of the cable 10 to the plates 48, 50.

The first clamp assembly 86 includes a first clamp structure 106 that is mounted to the first clamp mount 84 with the fastener 94. The first clamp structure 106 defines a front platform 108 with a fastener opening 110 therethrough for receiving the fastener 94, with a washer 112 positioned between the platform 108 and the fastener 94. The first clamp structure 106 also defines a longitudinal opening 114 that faces rearwardly. The longitudinal opening 114 is for receiving the strength member 14 of a cable 10 to be terminated using the termination bracket 18 of the present invention. The first clamp assembly 86 also includes a second clamp structure 116 that is to be coupled to the first clamp structure 106 via fasteners 118. When coupling, the fasteners 118 extend into the longitudinal opening 114 of the first clamp structure 106 through an upper wall 120 of the first clamp structure 106. The first clamp structure 106 defines a first clamp surface and the second clamp structure 116 defines a second clamp surface for capturing the strength member 14 thereinbetween. The second clamp structure 116 is generally a U-shaped structure 122 with one leg 124 of the U-shaped structure 122 located at the upper side 126 of the first clamp structure 106 and a second leg 128 of the U-shaped structure 122 located within the longitudinal opening 114 of the first clamp structure 106. The first leg 124 of the U-shaped second clamp structure 116 receives the fasteners 118 therethrough. The second leg 128 of the U-shaped second clamp structure 116 provides the second clamp surface. The fasteners 118 in the depicted embodiment are set screws and are used to contact and move the second leg 128 of the U-shaped structure 122 toward a bottom surface of the first clamp structure 106 that is located within the longitudinal opening 114.

When using the first clamp mounts 84, it is preferable to locate the press nut 96 on the upper side of the plates 48, 50 such that when a first clamp assembly 86 is used for fixing the strength member 14 of a cable 10 to the plates 48, 50, there is space 130 between the first clamp structure 116 and an upper surface 132 of the plate 48, 50. This space 130 accommodates any portions of the cable 10 protruding therefrom forwardly such as optical fibers, etc. Since the press nut 96 is located between the first clamp structure 116 and the upper surface 132 of the plate 48, 50, the thickness of the press nut 96 provides the space 130. Thus, it is preferred to mount the plates 48, 50 with the press nuts 96 facing upwardly.

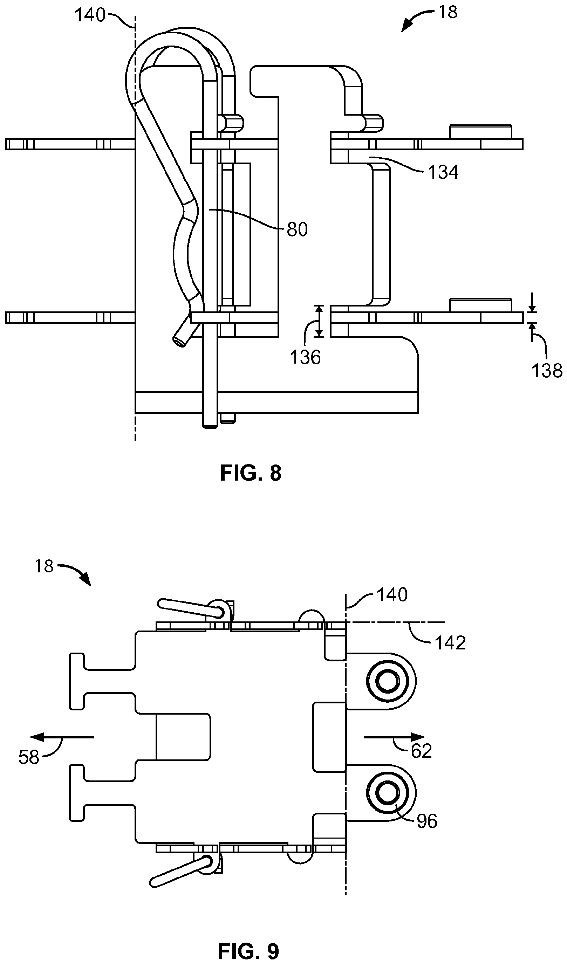

In order to correctly place the first and second plates 48, 50 on the base 32 such that the press nuts 96 are oriented upwardly, the termination bracket 18 includes a keying feature between the base 32 and the plates 48, 50. As shown in FIGS. 8 and 9, the notches 52 (e.g., the rear ends 56 thereof) on the first sidewall 34 of the base 32 are offset from the notches 52 on the second sidewall 36 of the base 32 along the front to back direction. Similarly, the tabs 76 at the first side 68 of each plate 48, 50 are offset from the tabs 76 at the second side 70 along the front to back direction. In this manner, the offset tabs 76 and notches 52 provide a keying feature for mounting the plate 48, 50 to the base 32 in the correct orientation. If the plates 48, 50 are placed on the base 32 in the incorrect orientation (i.e., upside down), the tabs 76 would not fully be seated in the notches 52. The tabs 76 abutting the stop surfaces 54 defined at the rear ends 56 of the notches 52 would force the plates 48, 50 to sit at an angle with respect to the sidewalls 34, 36 of the base 32.

A further inventive feature of the termination bracket 18 of the present disclosure is illustrated in FIGS. 3-9. As shown, when each plate 48, 50 is placed on the first and second sidewalls 34, 36 of the base, each of the notches 52 on each sidewall 34, 36 and each of the corresponding tabs 76 on each side 68, 70 of the plate 48, 50 are configured with gaps 134 therebetween along a top to bottom direction. The gaps 134 are created because the width 136 defined by the notches 52 is greater than the thickness 138 of the tabs 76. According to one embodiment, the dimensional difference between the width 136 of the notches 52 and the thickness 138 of the tabs 76 is about 5mm. The gaps 134 allow floatable movement of the plate 48, 50 relative to the base 32. The floatable movement of the plate 48, 50 with respect to the base 32 can occur along a first plane 140 perpendicular to the first sidewall 34, the second sidewall 36, and the transverse wall 38. The floatable movement can also occur along a second plane 142 that is parallel to the first sidewall 34 and the second sidewall 36 and perpendicular to the transverse wall 38.

This limited relative movement (i.e., floatability) between the plates 48, 50 and the base 32 allows a given termination bracket 18 to be able to fix different sized cables 10 (i.e., cables with different outer diameter) that may be used with the closure 20. Or, the floatability of the plates 48, 50 with respect to the base 32 allows some movement or flexibility to the termination bracket 18 in using the bracket 18 with different closures having slightly differently positioned cable openings 22.

It should also be noted that although in the depicted embodiment of the termination bracket 18, two plates 48, 50 are used per base 32, other numbers are possible. Even though each plate 48 is depicted to include two first clamp mounts 84 and two second clamp mounts 88, other numbers are possible. Also, although each plate 48, 50 is depicted as including two tabs 76 on each of the first side 68 and the second side 70 and the base 32 is depicted as including two notches 52 per plate 48, 50 on each of the first sidewall 34 and the second sidewall 36, different corresponding numbers are possible.

Although in the foregoing description, terms such as "top", "bottom", "front", "back", "rear", "right", "left", "upper", and "lower" may have been used for ease of description and illustration, no restriction is intended by such use of the terms. As discussed previously, the telecommunications devices such as the cable termination bracket 18 of the present disclosure can be used in any orientation, depending upon the desired application.

From the foregoing detailed description, it will be evident that modifications and variations can be made in the devices or methods of the disclosure without departing from the scope of the inventive aspects.

### LIST OF REFERENCE NUMERALS AND CORRESPONDING FEATURES:

10 - Telecommunications cable
12 - Outer jacket
14 - Strength member of cable
16 - Cable termination assembly
18 - Cable termination bracket
20 - Fiber optic closure/fixture
22 - Openings on end wall of fiber optic closure
24 - End wall of fiber optic closure
26 - Interior of fiber optic closure
28 - Interior wall of fiber optic closure
30 - Fastener openings of interior wall
32 - Base
34 - First sidewall
36 - Second sidewall
38 - Transverse bottom wall
40 - Open front
42 - Open back
44 - Open top
46 - Fastener opening of bottom wall
48 - First plate
50 - Second plate
52 - Notch
54 - First top surface
56 - Rear end of notch
58 - Rearward direction
60 - Second stop surface
62 - Forward direction
64 - Extension defining second stop surface
66 - Integral portion of sidewall forming extension
68 - First side
70 - Second side
72 - Front end
74 - Rear end
76 - Tab
78 - Opening of tab
80 - Bar
82 - Cotter pin
84 - First clamp mount
86 - First clamp assembly
88 - Second clamp mount
90 - Second clamp assembly
92 - Opening of first clamp mount
94 - Fastener
96 - Press nut
98 - T-shaped extension
100 - Mounting portion of T-shaped extension
102 - Retaining portion of T-shaped extension
104 - Ring clamp
106 - First clamp structure
108 - Front platform of first clamp structure
110 - Fastener opening
112 - Washer
114 - Longitudinal opening of first clamp structure
116 - Second clamp structure
118 - Fastener
120 - Upper wall of first clamp structure
122 - U-shaped structure defining second clamp structure
124 - First leg of U-shaped structure
126 - Upper side of first clamp structure
128 - Second leg of U-shaped structure
130 - Space
132 - Upper surface of plate
134-Gap
136 - Width of notch
138 - Thickness of tab
140 - First plane
142 - Second plane

## Claims

1. A cable termination bracket (18) comprising:
a base (32) configured to be mounted to a piece of telecommunications equipment (20), the base (32) defining a front (40) and a back (42), the base (32) defining a first sidewall (34) and a second sidewall (36); and
a plate (48/50) configured to be mounted to the first and second sidewalls (34, 36) of the base (32) to allow for limited relative movement therebetween, the plate (48/50) defining a first clamp mount (84) configured for receiving a first clamp assembly (86) for fixedly mounting a strength member (14) of a telecommunications cable (10) to the plate (48/50) such that any forces on the strength member (14) are transferred to the plate (48/50);
wherein when the plate (48/50) is pulled or pushed with respect to the base (32), the plate (48/50) is restricted from movement along a front to back direction, wherein the plate (48/50) is mounted to the base (32) such that the plate (48/50) is configured to relatively move with respect to the base (32) along a first plane (140) perpendicular to the first and second sidewalls (34, 36) and along a second plane (142) parallel to the first and second sidewalls (34, 36).

2. A cable termination bracket (18) comprising according to claim 1, wherein
the base (32) further defines a transverse wall (38) connecting the first sidewall (34) to the second sidewall (36), the transverse wall (38) configured for mounting the base (32) to the piece of telecommunications equipment (20), each of the first and second sidewalls (34, 36) defining a notch (52) that extends generally in a direction from the front(40) to the back (42), each of the first and second sidewalls (34, 36) defining a first stop surface (54) at a rear end (56) of the notch (52) for limiting movement in a rearward direction (58), each of the first and second sidewalls (34, 36) also defining a second stop surface (60) for limiting movement in a forward direction (62); wherein the
a plate (48/50) configured to be mounted to the base (32), defines a first side (68) and a second side (70), the plate (48/50) defining a tab (76) at each of the first side (68) and the second side (70), the tabs (76) configured to be inserted into the notches (52) defined by the first and second sidewalls (34, 36) of the base (32) in a direction from the front (40) to the back (42) and abut the first stop surface (54) when the plate (48/50) is pulled in the rearward direction (58), each tab (76) also defining an opening (78) for receiving a bar (80), wherein once the plate (48/50) is mounted to the base (32), the bar (80) is configured to abut the second stop surface (60) when the plate (48/50) is pushed in the forward direction (62);
wherein the notches (52) and the tabs (76) are configured with gaps (134) therebetween along a top to bottom direction to allow floatable movement of the plate (48/50) relative to the base (32) along the first plane (140) which is perpendicular to the first sidewall (34), the second sidewall (36), and also the transverse wall (38) and along the second plane (142) which is parallel to the first sidewall (34) and the second sidewall (36) but perpendicular to the transverse wall (38).

3. A cable termination bracket (18) according to claim 2, further comprising a first clamp assembly (86) mounted to the plate (48/50).

4. A cable termination bracket (18) according to claim 2, wherein the base (32) defines fastener openings (46) for mounting the base (32) to the piece of telecommunications equipment (20).

5. A cable termination bracket (18) according to claim 2, further comprising the bar (80) inserted into the opening (78) defined by each tab (76), the bar (80) defining at least a portion of a cotter pin (82) used for mounting the plate (48/50) to the base (32).

6. A cable termination bracket (18) according to claim 2, wherein each of the first and second sidewalls (34, 36) defines at least two notches (52), the notches (52) on the first sidewall (34) aligned vertically in the front to back direction, the notches (52) on the second sidewall (36) aligned vertically in the front to back direction.

7. A cable termination bracket (18) according to claim 6, wherein a second plate (50/48) is mounted to the base (32), the second plate (50/48) also defining a tab (76) with an opening (78) at each of a first side (68) and a second side (70), the bar (80) on each side (68, 70) configured to extend through both the first plate (48/50) and the second plate (50/48) and abut the second stop surface (60) defined by each of the first sidewall (34) and the second sidewall (36) when the plate (48/50) is pushed in the forward direction (62).

8. A cable termination bracket (18) according to claim 2, wherein each of the first and second sidewalls (34, 36) defines at least two notches (52), the notches (52) on the first sidewall (34) aligned horizontally in a top to bottom direction, the notches (52) on the second sidewall (36) aligned horizontally in the top to bottom direction.

9. A cable termination bracket (18) according to claim 8, wherein the plate (48/50) defines a pair of tabs (76) at each of the first side (68) and the second side (70), the tabs (76) configured to be inserted into the at least two notches (52) defined by each of the first and second sidewalls (34, 36) of the base (32) in a direction from the front (40) to the back (42) and abut first stop surfaces (54) when the plate (48/50) is pulled in the rearward direction (58).

10. A cable termination bracket (18) according to claim 8, wherein each of the first and second sidewalls (34, 36) defines at least four notches (52), the at least four notches (52) on each sidewall (34, 36) are defined by at least two horizontal pairs or at least two vertical pairs, wherein each pair of the at least two horizontal pairs are aligned vertically in the front to back direction and wherein each pair of the at least two vertical pairs are aligned horizontally in the top to bottom direction.

11. A cable termination bracket (18) according to claim 2, wherein the plate (48/50) further includes a second clamp mount (88) configured for receiving a second clamp assembly (90) for fixedly mounting an outer jacket (12) of a telecommunications cable (10) to the plate (48/50), wherein the first clamp mount (84) is positioned at a front end (72) of the plate (48/50) and the second clamp mount (88) is positioned at a rear end (74) of the plate.

12. A cable termination bracket (18) according to claim 11, wherein the second clamp mount (88) defines a T-shaped extension (98), the T-shaped extension (98) defining a mounting portion (100) and a retaining portion (102), the second clamp mount (88) configured for receiving a portion of a ring clamp (104).

13. A cable termination bracket (18) according to claim 11, wherein the plate (48/50) includes two first clamp mounts (84) and two second clamp mounts (88).

14. A cable termination bracket (18) according to claim 2, wherein the first clamp mount (84) defines a threaded opening (92) for receiving a fastener (94) for mounting the first clamp assembly (86).

15. A cable termination bracket (18) according to claim 2, further comprising the first clamp assembly (86) removably mounted to the first clamp mount (84), the first clamp assembly (86) defining a first clamp structure (106) with an opening (114) for receiving the cable strength member (14) and a second clamp structure (116) that is coupled to the first clamp structure (106) with a fastener (118), the first clamp structure (106) defining a first clamp surface, the second clamp structure (116) defining a second clamp surface for capturing the strength member (14) thereinbetween.

16. A cable termination bracket (18) according to claim 2, wherein the notch (52) on the first sidewall (34) of the base (32) is offset from the notch (52) on the second sidewall (36) of the base (32) along the front to back direction and the tab (76) at the first side (68) of the plate (48/50) is offset from the tab (76) at the second side (70) of the plate (48/50) along the front to back direction, wherein the offset tabs (76) and notches (52) provide a keying feature for mounting the plate (48/50) to the base (32) in the correct orientation.

17. A cable termination bracket (18) according to claim 2, wherein the second stop surface (60) defined by each of the first and second sidewalls (34, 36) of the base (32) is defined at least partially by an extension (64) that projects transversely outwardly from the first and second sidewalls (34, 36).

18. A cable termination bracket (18) according to claim 7, wherein each of the first plate (48/50) and the second plate (50/48) defines two first clamp mounts (84) for terminating the strength members (14) of a total of four cables (10) per termination bracket (18).

19. A cable termination bracket (18) according to claim 18, wherein each of the first plate (48/50) and the second plate (50/48) further includes two second clamp mounts (88) each configured for receiving a second clamp assembly (90) for fixedly mounting an outer jacket (12) of a telecommunications cable (10) to the plate (48/50), wherein the first clamp mounts (84) are positioned at front ends 72) of the plates (48/50) and the second clamp mounts (88) are positioned at rear ends (74) of the plates (48/50).

## Patentansprüche

1. Kabelabschlusshalterung (18), aufweisend:
eine Basis (32), die konfiguriert ist, um an einem Teil eines Telekommunikationsgerätes (20) befestigt zu werden, wobei die Basis (32) eine Vorderseite (40) und eine Hinterseite (42) definiert, wobei die Basis (32) eine erste Seitenwand (34) und eine zweite Seitenwand (36) definiert; und
eine Platte (48/50), die konfiguriert ist, um an der ersten und zweiten Seitenwand (34, 36) der Basis (32) befestigt zu werden, um eine eingeschränkte Relativbewegung dazwischen zu ermöglichen, wobei die Platte (48/50) eine erste Klemmhalterung (84) definiert, die zur Aufnahme einer ersten Klemmanordnung (86) konfiguriert ist, um ein Verstärkungselement (14) von einem Telekommunikationskabel (10) derart fest an der Platte (48/50) zu befestigen, dass jegliche Kräfte auf das Verstärkungselement (14) auf die Platte (48/50) übertragen werden;
wobei, die Bewegung der Platte (48/50) entlang einer von vorn nach hinten verlaufenden Richtung eingeschränkt ist, wenn die Platte (48/50) in Bezug auf die Basis (32) gezogen oder gedrückt wird, wobei die Platte (48/50) an der Basis (32) derart befestigt ist, dass die Platte (48/50) konfiguriert ist, um sich in Bezug auf die Basis (32) entlang einer ersten Ebene (140) senkrecht zu der ersten und zweiten Seitenwand (34, 36) und entlang einer zweiten Ebene (142) parallel zu der ersten und zweiten Seitenwand (34, 36) relativ zu bewegen.

2. Kabelabschlusshalterung (18) nach Anspruch 1, wobei
die Basis (32) ferner eine Querwand (38) definiert, die die erste Seitenwand (34) mit der zweiten Seitenwand (36) verbindet, wobei die Querwand (38) zur Befestigung der Basis (32) an dem Teil eines Telekommunikationsgerätes (20) konfiguriert ist, wobei jede der ersten und zweiten Seitenwand (34, 36) eine Aussparung (52) definiert, die sich im Wesentlichen in eine Richtung von der Vorderseite (40) zur Hinterseite (42) erstreckt, wobei jede der ersten und zweiten Seitenwand (34, 36) eine erste Anschlagfläche (54) an einem hinteren Ende (56) der Aussparung (52) zum Einschränken einer Bewegung in eine Rückwärtsrichtung (58) definiert, wobei jede der ersten und zweiten Seitenwand (34, 36) zudem eine zweite Anschlagfläche (60) zum Einschränken einer Bewegung in eine Vorwärtsrichtung (62) definiert;
wobei eine Platte (48/50), die konfiguriert ist, um an der Basis (32) befestigt zu werden, eine erste Seite (68) und eine zweite Seite (70) definiert, wobei die Platte (48/50) an jeder der ersten Seite (68) und der zweiten Seite (70) eine Nase (76) definiert, wobei die Nasen (76) konfiguriert sind, um in die Aussparungen (52), die durch die erste und zweite Seitenwand (34, 36) der Basis (32) definiert sind, in eine Richtung von der Vorderseite (40) zur Hinterseite (42) eingeführt zu werden, und an der ersten Anschlagfläche (54) anliegen, wenn die Platte (48/50) in die Rückwärtsrichtung (58) gezogen wird, wobei jede Nase (76) zudem eine Öffnung (78) zur Aufnahme eines Stabs (80) definiert, wobei, sobald die Platte (48/50) an der Basis (32) befestigt ist, der Stab (80) konfiguriert ist, um an der zweiten Anschlagfläche (60) anzuliegen, wenn die Platte (48/50) in die Vorwärtsrichtung (62) gedrückt wird;
wobei die Aussparungen (52) und die Nasen (76) mit dazwischenliegenden Zwischenräumen (134) entlang einer von oben nach unten verlaufenden Richtung konfiguriert sind, um eine gleitfähige Bewegung der Platte (48/50) relativ zur Basis (32) entlang der ersten Ebene (140), welche senkrecht zur ersten Seitenwand (34), zur zweiten Seitenwand (36), und auch zur Querwand (38) verläuft und entlang der zweiten Ebene (142), welche parallel zur ersten Seitenwand (34) und zur zweiten Seitenwand (36) aber senkrecht zur Querwand (38) verläuft, zu ermöglichen.

3. Kabelabschlusshalterung (18) nach Anspruch 2, die ferner eine erste Klemmanordnung (86), die an der Platte (48/50) befestigt ist, aufweist.

4. Kabelabschlusshalterung (18) nach Anspruch 2, wobei die Basis (32) Befestigungsöffnungen (46) zur Befestigung der Basis (32) an dem Teil des Telekommunikationsgerätes (20) definiert.

5. Kabelabschlusshalterung (18) nach Anspruch 2, die ferner den Stab (80) aufweist, der in die Öffnung (78), die durch jede Nase (76) definiert ist, eingeführt ist, wobei der Stab (80) mindestens einen Abschnitt eines Federsteckers (82) definiert, der zur Befestigung der Platte (48/50) an der Basis (32) genutzt wird.

6. Kabelabschlusshalterung (18) nach Anspruch 2, wobei jede der ersten und zweiten Seitenwand (34, 36) mindestens zwei Aussparungen (52) definiert, wobei die Aussparungen (52) an der ersten Seitenwand (34) vertikal in der von vorn nach hinten verlaufenden Richtung ausgerichtet sind, wobei die Aussparungen (52) an der zweiten Seitenwand (36) vertikal in der von vorn nach hinten verlaufenden Richtung ausgerichtet sind.

7. Kabelabschlusshalterung (18) nach Anspruch 6, wobei eine zweite Platte (50/48) an der Basis (32) befestigt ist, wobei die zweite Platte (50/48) zudem eine Nase (76) mit einer Öffnung (78) an jeder einer ersten Seite (68) und einer zweiten Seite (70) definiert, wobei der Stab (80) an jeder Seite (68, 70) konfiguriert ist, um sich sowohl durch die erste Platte (48/50) als auch die zweite Platte (50/48) zu erstrecken und an der zweiten Anschlagfläche (60) anzuliegen, die durch jede der ersten Seitenwand (34) und der zweiten Seitenwand (36) definiert ist, wenn die Platte (48/50) in die Vorwärtsrichtung (62) gedrückt wird.

8. Kabelabschlusshalterung (18) nach Anspruch 2, wobei jede der ersten und zweiten Seitenwand (34, 36) mindestens zwei Aussparungen (52) definiert, wobei die Aussparungen (52) an der ersten Seitenwand (34) horizontal in einer von oben nach unten verlaufenden Richtung ausgerichtet sind, wobei die Aussparungen (52) an der zweiten Seitenwand (36) horizontal in der von oben nach unten verlaufenden Richtung ausgerichtet sind.

9. Kabelabschlusshalterung (18) nach Anspruch 8, wobei die Platte (48/50) ein Nasenpaar (76) an jeder der ersten Seite (68) und der zweiten Seite (70) definiert, wobei die Nasen (76) konfiguriert sind, um in die mindestens zwei Aussparungen (52) eingeführt zu werden, die durch jede der ersten und zweiten Seitenwand (34, 36) der Basis (32) in eine Richtung von der Vorderseite (40) zur Hinterseite (42) definiert sind und an ersten Anschlagflächen (54) anliegen, wenn die Platte (48/50) in die Rückwärtsrichtung (58) gezogen wird.

10. Kabelabschlusshalterung (18) nach Anspruch 8, wobei jede der ersten und zweiten Seitenwand (34, 36) mindestens vier Aussparungen (52) definiert, wobei die mindestens vier Aussparungen (52) an jeder Seitenwand (34, 36) durch mindestens zwei horizontale Paare oder mindestens zwei vertikale Paare definiert sind, wobei jedes Paar der mindestens zwei horizontalen Paare vertikal in der von vorne nach hinten verlaufenden Richtung ausgerichtet ist und wobei jedes Paar der mindestens zwei vertikalen Paare horizontal in der von oben nach unten verlaufenden Richtung ausgerichtet ist.

11. Kabelabschlusshalterung (18) nach Anspruch 2, wobei die Platte (48/50) ferner eine zweite Klemmhalterung (88) aufweist, die zum Aufnehmen einer zweiten Klemmvorrichtung (90) konfiguriert ist, um eine Außenummantelung (12) eines Telekommunikationskabels (10) fest an der Platte (48/50) zu befestigen, wobei die erste Klemmhalterung (84) an einem vorderen Ende (72) der Platte (48/50) angeordnet ist und die zweite Klemmhalterung (88) an einem hinteren Ende (74) der Platte angeordnet ist.

12. Kabelabschlusshalterung (18) nach Anspruch 11, wobei die zweite Klemmhalterung (88) eine T-förmige Verlängerung (98) definiert, wobei die T-förmige Verlängerung (98) einen Befestigungsabschnitt (100) und einen Halteabschnitt (102) definiert, wobei die zweite Klemmhalterung (88) konfiguriert ist, um einen Abschnitt einer Ringschelle (104) aufzunehmen.

13. Kabelabschlusshalterung (18) nach Anspruch 11, wobei die Platte (48/50) zwei erste Klemmhalterungen (84) und zwei zweite Klemmhalterungen (88) aufweist.

14. Kabelabschlusshalterung (18) nach Anspruch 2, wobei die erste Klemmhalterung (84) eine Gewindeöffnung (92) definiert, um ein Befestigungselement (94) zur Befestigung der ersten Klemmanordnung (86) aufzunehmen.

15. Kabelabschlusshalterung (18) nach Anspruch 2, die ferner die erste Klemmanordnung (86) aufweist, die abnehmbar an der ersten Klemmhalterung (84) befestigt ist, wobei die erste Klemmanordnung (86) eine erste Klemmstruktur (106) mit einer Öffnung (114) zur Aufnahme des Kabelverstärkungselements (14) und eine zweite Klemmstruktur (116), die mit der ersten Klemmstruktur (106) mit einem Befestigungselement (118) verbunden ist, definiert, wobei die erste Klemmstruktur (106) eine erste Klemmfläche definiert und die zweite Klemmstruktur (116) eine zweite Klemmfläche definiert, um dazwischen das Verstärkungselement (14) zu erfassen.

16. Kabelabschlusshalterung (18) nach Anspruch 2, wobei die Aussparung (52) an der ersten Seitenwand (34) der Basis (32) zu der Aussparung (52) an der zweiten Seitenwand (36) der Basis (32) entlang der von vorne nach hinten verlaufenden Richtung versetzt ist und die Nase (76) an der ersten Seite (68) der Platte (48/50) zu der Nase (76) an der zweiten Seite (70) der Platte (48/50) entlang einer von vorne nach hinten verlaufenden Richtung versetzt ist, wobei die versetzten Nasen (76) und Aussparungen (52) ein Keilmerkmal zur Befestigung der Platte (48/50) an der Basis (32) in der richtigen Ausrichtung bereitstellen.

17. Kabelabschlusshalterung (18) nach Anspruch 2, wobei die zweite Anschlagfläche (60), die durch jede der ersten und zweiten Seitenwand (34, 36) der Basis (32) definiert ist, mindestens teilweise durch eine Verlängerung (64) definiert ist, die von der ersten und zweiten Seitenwand (34, 36) quer nach außen vorsteht.

18. Kabelabschlusshalterung (18) nach Anspruch 7, wobei jede der ersten Platte (48/50) und der zweiten Platte (50/48) zwei erste Klemmhalterungen (84) zum Abschließen der Verstärkungselemente (14) von insgesamt vier Kabeln (10) pro Abschlusshalterung (18) definiert.

19. Kabelabschlusshalterung (18) nach Anspruch 18, wobei jede der ersten Platte (48/50) und der zweiten Platte (50/48) ferner zwei zweite Klemmhalterungen (88) aufweist, die jeweils zur Aufnahme einer zweiten Klemmvorrichtung (90) konfiguriert sind, um eine Außenummantelung (12) eines Telekommunikationskabels (10) fest an der Platte (48/50) zu befestigen, wobei die ersten Klemmhalterungen (84) an vorderen Enden (72) der Platten (48/50) angeordnet sind und die zweiten Klemmhalterungen (88) an hinteren Enden (74) der Platten (48/50) angeordnet sind.

## Revendications

1. Support de terminaison de câble (18), comprenant :
une base (32) conçue pour être montée sur un élément d'équipement de télécommunication (20), la base (32) définissant un avant (40) et un arrière (42), la base (32) définissant une première paroi latérale (34) et une seconde paroi latérale (36) ; et
une plaque (48/50) conçue pour être montée sur les première et seconde parois latérales (34, 36) de la base (32) pour permettre un déplacement relatif limité de la plaque entre lesdites parois latérales, la plaque (48/50) définissant un premier montage de serrage (84) conçu pour recevoir un premier ensemble de serrage (86) pour monter de manière fixe un élément de renforcement (14) d'un câble de télécommunication (10) sur la plaque (48/50) de sorte que n'importe quelles forces exercées sur l'élément de renforcement (14) soient transférées à la plaque (48/50) ;
le déplacement de la plaque (48/50) étant limité le long d'une direction de l'avant vers l'arrière quand la plaque (48/50) est tirée ou poussée par rapport à la base (32), la plaque (48/50) étant montée sur la base (32) de sorte que la plaque (48/50) puisse se déplacer de manière relative par rapport à la base (32) le long d'un premier plan (140) perpendiculaire aux première et seconde parois latérales (34, 36) et le long d'un second plan (142) parallèle aux première et seconde parois latérales (34, 36).

2. Support de terminaison de câble (18) selon la revendication 1,
dans lequel la base (32) définit en outre une paroi transversale (38) connectant la première paroi latérale (34) à la seconde paroi latérale (36), la paroi transversale (38) étant conçue pour le montage de la base (32) sur l'élément d'équipement de télécommunication (20), chacune des première et seconde parois latérales (34, 36) définissant une encoche (52) qui s'étend généralement dans une direction de l'avant (40) vers l'arrière (42), chacune des première et seconde parois latérales (34, 36) définissant une première surface d'arrêt (54) au niveau d'une extrémité arrière (56) de l'encoche (52) pour limiter un déplacement en direction arrière (58), chacune des première et seconde parois latérales (34, 36) définissant également une seconde surface d'arrêt (60) pour limiter un déplacement en direction avant (62) ;
dans lequel la plaque (48/50), conçue pour être montée sur la base (32), définit un premier côté (68) et un second côté (70), la plaque (48/50) définissant une patte (76) au niveau de chacun des premier (68) et second (70) côtés, les pattes (76) étant conçues pour être insérées dans les encoches (52) définies par les première et seconde parois latérales (34, 36) de la base (32) dans une direction de l'avant (40) vers l'arrière (42), et étant en butée contre la première surface d'arrêt (54) quand la plaque (48/50) est tirée en direction en arrière (58), chaque patte (76) définissant également une ouverture (78) pour la réception d'une barre (80), la barre (80) étant conçue, une fois la plaque (48/50) montée sur la base (32), pour être en butée contre la seconde surface d'arrêt (60) quand la plaque (48/50) est poussée en direction avant (62) ;
les encoches (52) et les pattes (76) étant conçues avec des espaces (134) entre elles le long d'une direction de haut en bas pour permettre un déplacement flottant de la plaque (48/50) par rapport à la base (32) le long du premier plan (140) perpendiculaire à la première paroi latérale (34), à la seconde paroi latérale (36) et à la paroi transversale (38), et le long du second plan (142) parallèle à la première paroi latérale (34) et à la seconde paroi latérale (36), mais perpendiculaire à la paroi transversale (38).

3. Support de terminaison de câble (18) selon la revendication 2, comprenant en outre un premier ensemble de serrage (86) monté sur la plaque (48/50).

4. Support de terminaison de câble (18) selon la revendication 2, dans lequel la base (32) définit des ouvertures de fixation (46) pour le montage de la base (32) sur l'élément d'équipement de télécommunication (20).

5. Support de terminaison de câble (18) selon la revendication 2, dans lequel la barre (80) est insérée dans l'ouverture (78) définie par chaque patte (76), la barre (80) définissant au moins une partie d'une goupille fendue (82) utilisée pour le montage de la plaque (48/50) sur la base (32).

6. Support de terminaison de câble (18) selon la revendication 2, dans lequel chacune des première et seconde parois latérales (34, 36) définit au moins deux encoches (52), les encoches (52) sur la première paroi latérale (34) étant alignées verticalement dans la direction de l'avant vers l'arrière, et les encoches (52) sur la seconde paroi latérale (36) étant alignées verticalement dans la direction de l'avant vers l'arrière.

7. Support de terminaison de câble (18) selon la revendication 6, dans lequel une seconde plaque (50/48) est montée sur la base (32), la seconde plaque (50/48) définissant également une patte (76) avec une ouverture (78) au niveau d'un premier côté (68) et d'un second côté (70), la barre (80) de chaque côté (68, 70) étant conçue pour s'étendre à travers la première plaque (48/50) et la seconde plaque (50/48) et être en butée contre la seconde surface d'arrêt (60) définie par chacune des première (34) et seconde (36) parois latérales quand la plaque (48/50) est poussée en direction avant (62).

8. Support de terminaison de câble (18) selon la revendication 2, dans lequel chacune des première et seconde parois latérales (34, 36) définit au moins deux encoches (52), les encoches (52) sur la première paroi latérale (34) étant alignées horizontalement dans une direction de haut en bas, et les encoches (52) sur la seconde paroi latérale (36) étant alignées horizontalement dans la direction de haut en bas.

9. Support de terminaison de câble (18) selon la revendication 8, dans lequel la plaque (48/50) définit une paire de pattes (76) au niveau de chacun des premier (68) et second (70) côtés, les pattes (76) étant conçues pour être insérées dans les au moins deux encoches (52) définies par chacune des première et seconde parois latérales (34, 36) de la base (32) dans une direction de l'avant (40) vers l'arrière (42), et étant en butée contre la première surface d'arrêt (54) quand la plaque (48/50) est tirée en direction arrière (58).

10. Support de terminaison de câble (18) selon la revendication 8, dans lequel chacune des première et seconde parois latérales (34, 36) définit au moins quatre encoches (52), les au moins quatre encoches (52) sur chaque paroi latérale (34, 36) étant définies par au moins deux paires horizontales ou au moins deux paires verticales, chaque paire des au moins deux paires horizontales étant alignée verticalement dans la direction de l'avant vers l'arrière, et chaque paire des au moins deux paires verticales étant alignée horizontalement dans la direction de haut en bas.

11. Support de terminaison de câble (18) selon la revendication 2, dans lequel la plaque (48/50) comprend en outre un second montage de serrage (88) conçu pour recevoir un second ensemble de serrage (90) pour monter de manière fixe une gaine extérieure (12) d'un câble de télécommunication (10) sur la plaque (48/50), le premier montage de serrage (84) étant positionné au niveau d'une extrémité avant (72) de la plaque (48/50), et le second montage de serrage (88) étant positionné au niveau d'une extrémité arrière (74) de la plaque.

12. Support de terminaison de câble (18) selon la revendication 11, dans lequel le second montage de serrage (88) définit une extension en forme de T (98), l'extension en forme de T (98) définissant une partie de montage (100) et une partie de retenue (102), le second montage de serrage (88) étant conçu pour recevoir une partie d'un collier de serrage (104).

13. Support de terminaison de câble (18) selon la revendication 11, dans lequel la plaque (48/50) comprend deux premiers montages de serrage (84) et deux seconds montages de serrage (88).

14. Support de terminaison de câble (18) selon la revendication 2, dans lequel le premier montage de serrage (84) définit une ouverture filetée (92) pour la réception d'un élément de fixation (94) pour le montage du premier ensemble de serrage (86).

15. Support de terminaison de câble (18) selon la revendication 2, dans lequel le premier ensemble de serrage (86) est monté amovible sur le premier montage de serrage (84), le premier ensemble de serrage (86) définissant une première structure de serrage (106) avec une ouverture (114) pour la réception de l'élément de renforcement de câble (14), et une seconde structure de serrage (116) accouplée à la première structure de serrage (106) au moyen d'un élément de fixation (118), la première structure de serrage (106) définissant une première surface de serrage, et la seconde structure de serrage (116) définissant une seconde surface de serrage pour retenir l'élément de renforcement (14) entre elles.

16. Support de terminaison de câble (18) selon la revendication 2, dans lequel l'encoche (52) sur la première paroi latérale (34) de la base (32) est décalée de l'encoche (52) sur la seconde paroi latérale (36) de la base (32) le long de la direction de l'avant vers l'arrière, et la patte (76) au niveau du premier côté (68) de la plaque (48/50) est décalée de la patte (76) au niveau du second côté (70) de la plaque (48/50) le long de la direction de l'avant vers l'arrière, les pattes (76) et les encoches (52) décalées constituant un élément de clavetage pour le montage de la plaque (48/50) à la base (32) dans l'orientation correcte.

17. Support de terminaison de câble (18) selon la revendication 2, dans lequel la seconde surface d'arrêt (60) définie par chacune des première et seconde parois latérales (34, 36) de la base (32) est définie au moins en partie par une extension (64) qui se projette transversalement vers l'extérieur à partir des première et seconde parois latérales (34, 36).

18. Support de terminaison de câble (18) selon la revendication 7, dans lequel chacune des première (48/50) et seconde (50/48) plaques définit deux premiers montages de serrage (84) pour la terminaison des éléments de renforcement (14) d'un total de quatre câbles (10) par support de terminaison (18).

19. Support de terminaison de câble (18) selon la revendication 18, dans lequel chacune des première (48/50) et seconde (50/48) plaques comprend en outre deux seconds montages de serrage (88) conçus chacun pour recevoir un second ensemble de serrage (90) pour monter de manière fixe une gaine extérieure (12) d'un câble de télécommunication (10) sur la plaque (48/50), les premiers montages de serrage (84) étant positionnés au niveau d'extrémités avant 72) des plaques (48/50), et les seconds montages de serrage (88) étant positionnés au niveau d'extrémités arrière (74) des plaques (48/50).
